# EUROPÄISCHE PATENTSCHRIFT

(11) **EP 0 701 692 B1**
(45) Veröffentlichungstag und Bekanntmachung des Hinweises auf die Patenterteilung: **25.02.1998**
(21) Anmeldenummer: 94914338.2
(22) Anmeldetag: 11.05.1994
(51) Int. Cl.: G01N 27/407

(54) **MESSFÜHLERANORDNUNG IN EINER GASLEITUNG**
GAS-LINE SENSOR
SYSTEME DE DETECTION PLACE DANS UNE CONDUITE DE GAZ

(30) Priorität: 01.06.1993 DE 4318107
(43) Veröffentlichungstag der Anmeldung: 20.03.1996
(73) Patentinhaber: ROBERT BOSCH GMBH, 70442 Stuttgart (DE)
(72) Erfinder: HENKELMANN, Konrad, D-71292 Friolzheim (DE); FRIES, Romuald, D-71254 Ditzingen (DE)
(86) Internationale Anmeldenummer: DE9400536
(87) Internationale Veröffentlichungsnummer: WO9428404

(56) Entgegenhaltungen:
- EP-A- 0 158 256
- WO-A-86/00709
- US-A- 4 096 050
- US-A- 4 479 866
- US-A- 4 591 422

## Beschreibung

### Stand der Technik

Die Erfindung geht aus von einer Meßfühleranordnung zur Detektierung von in einer Gasleitung strömenden Meßgasen nach der Gattung des Hauptanspruchs.

Aus der US-A 4,096,050 ist ein Gassensor mit einem Gehäuse und einem das Sensorelement umgebenden Schutzrohr mit Gasöffnungen bekannt, bei dem die Gasöffnungen an der der Strömungsrichtung des Meßgases abgewandten Seite der Mantelfläche des Schutzrohres angeordnet sind. Zur Strömungsrichtung des Meßgases weisend ist die Mantelfläche des Schutzrohres geschlossen. Zur Befestigung des Gassensors in einer Öffnung eines Abgasrohres weist das Gehäuse einen Flansch mit zwei Bohrungen auf. Am Abgasrohr sind zwei Gewindebolzen befestigt, die die am Flansch angeordneten Bohrungen durchdringen. Auf die Gewindebolzen ist jeweils eine Befestigungsmutter geschraubt, mit denen der Flansch am Abgasrohr gasdicht befestigt wird.

Bei den ferner bekannten Meßfühleranordnungen (US-PS 4,756,885) ist der meßgasseitige Boden des Schutzrohres mit einer Gasöffnung zur Zuführung des Meßgases zum Meßfühler ausgeführt. Zum Zweck der Durchströmung des Schutzrohres sind für den Austritt des Meßgases in der Seitenwand des Schutzrohres nahe am meßgasseitigen Ende des Gehäuses mehrere Austrittsöffnungen vorgesehen. Diese Anordnung von Eintrittsöffnung und Austrittsöffnung verhindert jedoch nicht, daß durch die auch gegen die Strömungsrichtung des Meßgases weisenden Austrittsöffnungen Meßgas in das Schutzrohr eintritt, wodurch das insbesondere in Abgasanlagen von Verbrennungsmotoren sich bildende Kondenswasser an das keramische Meßelement gelangt. Wenn das Kondenswasser mit der beheizten Keramik des Meßelements in Berührung kommt, können infolge des Temperaturschocks in der Keramik Risse entstehen, welche schließlich zum Ausfall des Meßelements führen können. Ferner werden die bekannten Meßfühler mittels eines am Gehäuse des Meßfühlers angeordneten Gewindes in die Gasleitung eingeschraubt. Dadurch ist kein gerichteter Einbau möglich, so daß die Gasöffnungen im Schutzrohr in beliebige Richtung weisen können.

### Vorteile der Erfindung

Die erfindungsgemäße Meßfühleranordnung mit den kennzeichnenden Merkmalen des Hauptanspruchs hat demgegenüber den Vorteil, daß das Kondenswasser nicht an das keramische Meßelement gelangt.

Durch die in den Unteransprüchen aufgeführten Maßnahmen sind vorteilhafte Weiterbildungen und Verbesserungen der im Hauptanspruch angegebenen Meßfühleranordnung möglich. Besonders vorteilhaft ist es, zur richtigen Orientierung der Gasöffnungen in der Gasleitung den Meßfühler justierbar einzusetzen. Dies wird zweckmäßigerweise durch Einsetzen des Meßfühlers in einen an der Gasleitung angeordneten Flansch und durch Befestigen mit einer Überwurfmutter erreicht.

### Zeichnung

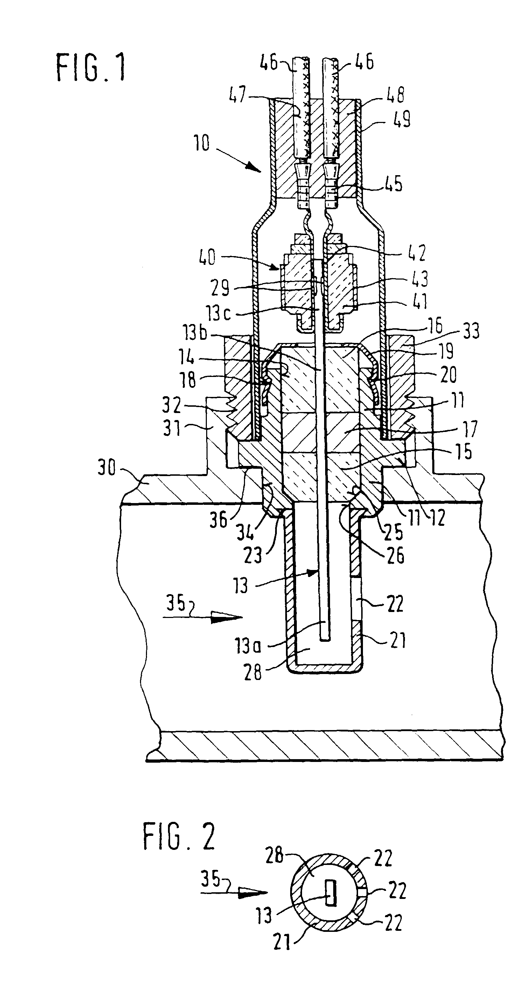

Ein Ausführungsbeispiel der Erfindung ist in der Zeichnung dargestellt und in der nachfolgenden Beschreibung näher erläutert. Figur 1 zeigt einen Querschnitt der erfindungsgemäßen Meßfühleranordnung und Figur 2 einen Schnitt durch ein Schutzrohr mit mehreren Gasöffnungen.

### Ausführungsbeispiel

In der Zeichnung ist ein Meßfühler 10 für die Bestimmung des Sauerstoffgehaltes in Abgasen in beispielsweise einer Auspuffleitung 30 eines Verbrennungsmotors eingesetzt. Der Meßfühler 10 besitzt ein Meßelement 13, welches nach dem bekannten Prinzip der Sauerstoffionenleitung eines Festelektrolyten arbeitet, wobei als Festelektrolyt bevorzugt stabilisiertes Zirkoniumdioxid Verwendung findet. Das Meßelement 13 ist im vorliegenden Beispiel ein in Schichttechnik aufgebauter planarer Sensor. Es ist aber genauso denkbar, als Meßelement 13 einen aus einem Festelektrolytrohr gebildeten, sogenannten Fingersensor zu verwenden. Auf die Darstellung und Beschreibung des Meßelements 13 wird an dieser Stelle verzichtet und beispielsweise auf die US-A-4 096 050 oder die DE-OS 30 17 947 (US-PS 4 502 939) verwiesen, wobei das Meßelement 13 eine unterschiedliche Wirkungsweise aufweisen kann.

Der Meßfühler 10 hat ein rohrförmiges Metallgehäuse 11 mit einer Längsbohrung 14, die einen koaxialen Absatz 25 aufweist, der der Meßgasseite des Meßfühlers 10 abgewandt ist und den Übergang zu einer meßgasseitigen Bohrung 26 bildet. Am äußeren Umfang besitzt das Metallgehäuse 11 einen radial umlaufenden Bund 12. In der Bohrung 26 des Metallgehäuses 11 ist ein becherförmiges Schutzrohr 21 mit einem nach außen weisenden Ringflansch 23 festgelegt. Das Schutzrohr 21 besitzt zum Gaseintritt und Gasaustritt an seiner Seitenwand eine Gasöffnung 22. Der vom Schutzrohr 21 umfaßte Raum bildet einen Meßraum 28 für das Meßelement 13.

In den Meßraum 28 ragt mit Abstand zum Schutzrohr 21 ein meßgasseitiger Abschnitt 13a des Meßelements 13. Ein anschlußseitiger Abschnitt 13b des Meßelements 13 ist in der Längsbohrung 14 des Metallgehäuses 11 elektrisch isoliert gehalten. Dazu ist in der Längsbohrung 14 des Metallgehäuses 11 ein elektrisch isolierender meßgasseitiger Keramikeinsatz 15, der auf dem Absatz 25 in der Längsbohrung 14 aufliegt. Am meßgasseitigen Keramikeinsatz 15 liegt eine paketartige Dichtung 17 an, welche das Meßelement 13 umfaßt und bis an die Wand der Längsbohrung 14 des Metallgehäuses 11 reicht und aus einem elektrisch isolierendem Material, wie zum Beispiel Talkum steht. Auf die Dichtung 17 ist ein anschlußseitiger Keramikeinsatz 16 aufgesetzt, welcher ebenfalls das Meßelement 13 umgibt und den Querschnitt der Längsbohrung 14 ausfüllt sowie anschlußseitig aus der Längsbohrung 14 des Metallgehäuses 11 herausragt. Auf der anschlußseitigen Stirnfläche des anschlußseitigen Keramikeinsatzes 16 liegt eine unter mechanischer Vorspannung stehende Haltekappe 19 auf, die den anschlußseitigen Keramikeinsatz 16, die Dichtung 17 und den meßgasseitigen Keramikeinsatz 15 gegen den Absatz 25 in der Längsbohrung 14 des Metallgehäuses 11 drückt. Als Gegenlager ist die Haltekappe 19 mit dem meßgasseitigen Endabschnitt in einer Ringnut 18 an der Außenseite des Metallgehäuses 11 mittels Einrastnasen 20 festgelegt.

Über die Haltekappe 19 ragt ein anschlußseitiger Endabschnitt 13c heraus, welcher beispielsweise zwei nicht näher dargestellte Kontaktflächen 29 aufweist. Die Kontaktflächen 29 stehen mit nicht dargestellten Leiterbahnen in Verbindung, die ihrerseits zu ebenfalls nicht dargestellten, auf dem meßgasseitigen Abschnitt 13a angeordneten Elektroden und Heizleitern führen.

Auf die Kontaktflächen 29 ist ein Verbindungsstecker 40 aufgeschoben. Der Verbindungsstecker 40 setzt sich zusammen aus zwei Kontaktteilträgern 41, Kontaktteilen 42 und einem Federelement 43. Die Kontaktteilträger 41 sind elektrisch isolierende Bauteile aus Keramik, welche die zur Kontaktierung mit den Kontaktflächen 29 vorgesehenen Kontaktteile 42 aus streifenförmigem Blech enthalten. Die beiden Kontaktteilträger 41 und der dazwischen angeordnete anschlußseitige Endabschnitt 13c des Meßelements 13 werden gemeinsam von dem ringartigen Federelement 43 umfaßt und zusammengehalten. Anschlußseitig sind die Kontaktteile 42 jeweils streifenförmig verlängert und an ihrem diesseitigen Endabschnitt als Verbindungsstelle 45 für Anschlußleiter 46 ausgebildet.

Die Verbindungsstellen 45 der Kontaktteile 42 mit den Anschlußleitern 46 sind jeweils in einem Durchgangsloch 47 eines elastischen, stopfenartigen Formteils 48 eng umfaßt, welches aus einem warmfesten Material besteht, wie beispielsweise PTFE. Das Formteil 48 wird von einer Metallhülse 49 umfaßt und zusammengepreßt. Die Metallhülse 49 ist mit ihrer meßgasseitigen Öffnung auf das Metallgehäuse 11 aufgeschoben und daran durch Schweißen oder ähnlichem befestigt. Die Metallhülse 49 ist zweckmäßigerweise stufenförmig gestaltet und paßt sich mit unterschiedlichen Durchmesserbereichen den Gegebenheiten der darin enthaltenen Bauteile des Meßelements 13 an.

In der Auspuffleitung 30 ist eine Öffnung 34 mit einer sie umgebenden Dichtfläche 36 vorgesehen, welche von einem Flansch 31 mit einem Gewinde 32 umgeben ist. Zur Befestigung wird der Meßfühler 10 durch die Öffnung 34 geschoben, so daß er mit seinem Bund 12 auf der Auspuffleitung 30 aufsitzt. Über den Meßfühler 10 wird eine Überwurfmutter 33 geführt, die in das Gewinde 32 eingeschraubt wird und den Bund 12 des Metallgehäuses 11 auf die Dichtfläche 36 der Auspuffleitung 30 drückt. Zwischen Dichtfläche 36 und Bund 12 kann zweckmäßigerweise zur gasdichten Befestigung ein Dichtring angeordnet sein. Das Meßgas strömt in Strömungsrichtung 35 durch die Auspuffleitung 30.

An der Metallhülse 49 des Meßfühlers 10 ist beispielsweise eine nicht dargestellte Markierung angebracht, die die Lage der Gasöffnung 22 am Schutzrohr 21 angibt. Mit Hilfe dieser Markierung wird der Meßfühler 10 in die Öffnung 34 der Auspuffleitung 30 derart eingesetzt, daß die Gasöffnung 22 nicht vom Meßgas angeströmt wird. Eine bevorzugte Anordnung liegt dann vor, wenn die Gasöffnung 22 in Strömungsrichtung 35 des Meßgases weist.

Nachdem der Meßfühler 10 in der Öffnung 34 seine in bezug auf die Strömung des Meßgases bevorzugte Orientierung erhalten hat, wird der Meßfühler mit der Überwurfmutter 33 an der Auspzffleitung 30 befestigt. Andererseits ist eine Ausführungsform denkbar, bei der der Bund 12 eine Geometrie derart aufweist, daß eine Montage nur in richtiger Lage möglich ist, beispielsweise mit formschlüssigen Mitteln (vgl. US-A-4 096 050, Sp. 2, Z 18-20 oder Sp. 3, Z. 11, 12).

Neben der Ausführung des Schutzrohres 21 mit einer einzigen Gasöffnung ist gemäß Figur 2 auch eine Ausführungsform mit mehreren Gasöffnungen 22 möglich, wobei die Gasöffnungen 22 an der Seite der Mantelfläche des Schutzrohres 21 angeordnet sind, die nicht vom Meßgas angeströmt wird. Dadurch wird erreicht, daß das mit Kondenswasser beladene Abgas nicht in den Meßraum 28 gelangt, sondern sich an der gegen die Strömungsrichtung 35 weisenden Wand des Schutzrohres 21 abscheidet. Andererseits ist es durchaus möglich, zur besseren Durchströmung des Meßraumes 28 auch gegen die Strömungsrichtung 35 gerichtete Öffnungen im Schutzrohr 21 anzubringen, die jedoch einen äußerst geringen Gesamtquerschnitt aufweisen sollten, um das Eindringen von Kondenswasser möglichst zu verhindern (vgl. US-A-4 096 050, Sp. 2, Z. 29, 30 oder Sp. 2, Z. 6-8).

Ergänzend sei erwähnt, daß unter dem Ausdruck "Meßelement 13" insbesondere Gasmeßelemente zu verstehen sind, welche den Lambdawert von Gasgemischen ermitteln, daß es aber auch Temperaturfühler, Feuchtigkeitsfühler, Druckfühler oder ähnliche Sensoren sein können.

## Patentansprüche

1. Meßfühleranordnung zur Detektierung von in einer Gasleitung (30) mit einer Strömungsrichtung strömenden Meßgasen, insbesondere von in einer Abgasleitung von Verbrennungsmotoren strömenden Abgasen, mit einem Meßelement (10), dessen aus einem Gehäuse (11) herausragender meßgasseitiger Abschnitt von einem Schutzrohr (21) mit Abstand umgeben ist, und mit einer in die Gasleitung (30) eingebrachten Öffnung (34), durch die das Schutzrohr (21) des Meßfühlers (10) in das Meßgas ragt, wobei das Schutzrohr (21) mindestens eine Gasöffnung (22) für das Meßgas aufweist, die in der Gasleitung (30) justierbar in Bezug auf die Strömungsrichtung (35) des Meßgases an der der Strömung (35) des Meßgases abgewandten Seite der Mantelfläche des Schutzrohres (21) angeordnet ist, dadurch gekennzeichnet, daß die Öffnung (34) der Gasleitung (30) mit einem Flansch (31) versehen ist und daß das Gehäuse (11) des Meßelements (10) mit einem Bund (12) ausgeführt ist, der im Flansch (31) auf der Gasleitung (30) aufsitzt und mit weichem das Meßelement (10) im Flansch (31) mit einem mit dem Flansch zusammenwirkenden Befestigungselement (33) befestigt ist.

2. Meßfühler nach Anspruch 1, dadurch gekennzeichne, daß der Flansch (31) ein Gewinde (32) aufweiset, und daß eine am Bund (12) angreifende Überwurfmutter oder Hohlschraube (33) mit dem Gewinde (32) verschraubbar ist.

3. Meßfühler nach Anspruch 1 oder 2, dadurch gekennzeichnet, daß die Gasleitung (30) um die Öffnung (34) herum eine Dichtfläche (36) aufweist, auf der der Bund (12) zumindest gasdicht aufsitzt.

4. Meßfühler nach einem der vorhergehenden Ansprüche, dadurch gekennzeichnet, daß der außerhalb der Gasleitung (30) liegende Bereich des Meßfühlers (10) eine Markierung aufweist, die die Lage der Gasöffnung (22) im Schutzrohr (21) angibt.

## Claims

1. Measuring-probe arrangement for detecting measured gases flowing in a gas conduit (30) with one flow direction, especially exhaust gases flowing in an exhaust conduit of internal combustion engines, with a measuring element (10), that section of which which is located at the measured-gas end and which projects from a housing (11) is surrounded with a clearance by a protective tube (21), and with an opening (34) which is made in the gas conduit (30) and through which the protective tube (21) of the measuring probe (10) projects into the measured gas, the protective tube (21) having at least one gas opening (22) for the measured gas, which opening is arranged in the gas conduit (30) on that side of the circumferential surface of the protective tube (21) which faces away from the flow (35) of the measured gas, in such a way that it can be adjusted in relation to the flow direction (35) of the measured gas, characterized in that the opening (34) in the gas conduit (30) is provided with a flange (31) and in that the housing (11) of the measuring element (10) is designed with a collar (12) which rests on the gas conduit (30) in the flange (31) and by means of which the measuring element (10) is fastened in the flange (31) to a fastening element (33) which interacts with the flange.

2. Measuring probe according to Claim 1, characterized in that the flange (31) has a thread (32), and in that a union nut or hollow screw (33) engaging on the collar (12) can be screwed onto the thread (32).

3. Measuring probe according to Claim 1 or 2, characterized in that the gas conduit (30) has around the opening (34) a sealing surface (36) on which the collar (12) rests at least gastightly.

4. Measuring probe according to one of the preceding claims, characterized in that that region of the measuring probe (10) which lies outside the gas conduit (30) has a marking which indicates the position of the gas opening (22) in the protective tube (21).

## Revendications

1. Dispositif de capteur de mesure pour détecter des gaz à mesurer s'écoulant suivant un certain sens d'écoulement dans une conduite de gaz (30), notamment de gaz d'échappement de moteurs à combustion interne dans la tubulure de gaz d'échappement, comprenant :
- un élément de mesure (10) dont un segment situé du côté du gaz à mesurer, sortant du boîtier (11) est entouré à une certaine distance par un tube protecteur (21), et,
- une ouverture (34) réalisée dans la conduite de gaz (30), à travers laquelle le tube protecteur (21) du capteur de mesure (10) vient dans le gaz à mesurer,
- le tube protecteur (21) comportant au moins une ouverture de passage de gaz (22) pour le gaz à mesurer,
- cette ouverture étant réglable dans la conduite de gaz (30) par rapport à la direction d'écoulement (35) du gaz à mesurer et est prévue du côté de la surface enveloppe du tube protecteur (21) opposée à l'écoulement (35) du gaz à mesurer,
caractérisé en ce que
l'ouverture (34) de la conduite de gaz (30) est munie d'une bride (31) et,
- le boîtier (11) de l'élément de mesure (10) comporte une collerette (12) qui repose dans la bride (31) sur la conduite de gaz (30) par laquelle l'élément de mesure (10) est fixé dans la bride (31) à l'aide d'un élément de fixation (33) coopérant avec la bride.

2. Capteur de mesure selon la revendication 1,
caractérisé en ce que
la bride (31) comporte un filetage (32) et un écrou chapeau ou une vis creuse (33) vissée dans le filetage (32) pour agir sur la collerette (12).

3. Capteur de mesure selon la revendication 1 ou 2,
caractérisé en ce que
la conduite de gaz (30) comporte une surface d'étanchéité (36) autour de l'ouverture (34) sur laquelle la collerette (12) repose au moins de manière étanche aux gaz.

4. Capteur selon l'une des revendications précédentes,
caractérisé en ce que
la zone du capteur de mesure (10) située à l'extérieur de la conduite de gaz (30) comporte un repère indiquant la position de l'ouverture de passage de gaz (22) dans le tube protecteur (21).
